# EUROPÄISCHE PATENTSCHRIFT

(11) **EP 3 026 254 B1**
(45) Veröffentlichungstag und Bekanntmachung des Hinweises auf die Patenterteilung: **12.12.2018**
(21) Anmeldenummer: 15191740.8
(22) Anmeldetag: 27.10.2015
(51) Int. Cl.: F02M 57/00, G01L 23/10

(54) **Injektor mit einem Sensor zur Aufnahme eines Druckverlaufs**
Injector with a sensor for measuring a pressure pattern
Injecteur avec un capteur pour mesurer un cours de pression

(30) Priorität: 25.11.2014 DE 102014223921
(43) Veröffentlichungstag der Anmeldung: 01.06.2016
(73) Patentinhaber: ROBERT BOSCH GMBH, 70442 Stuttgart (DE)
(72) Erfinder: Melcher, Reinhold, 91077 Neunkirchen A. Brand (DE); Cromme, Peter, 96050 Bamberg (DE); Hielscher, Andreas, 70499 Stuttgart (DE)

(56) Entgegenhaltungen:
- EP-A2- 0 304 199
- EP-A2- 0 715 159
- DE-A1- 19 813 756
- DE-A1-102008 055 053
- DE-A1-102010 016 424
- US-A1- 2011 006 130

## Beschreibung

Die Erfindung betrifft einen Injektor aufweisend einen Injektorkörper sowie einen Düsenkörper mit einer eine Düsennadel aufnehmenden Bohrung, wobei die Düsennadel in der Bohrung translatorisch bewegbar ist und eine mit einem Düsennadelsitz zusammenwirkende Düsennadelspitze aufweist, wobei dem Düsennadelsitz zumindest eine Düsenöffnung zugeordnet ist, die gesteuert von der Düsennadel mit einer Hochdruckleitung für ein Medium in dem Injektorkörper und dem Düsenkörper verbunden ist, und wobei ein Sensor zur Aufnahme eines Druckverlaufs des Mediums vorgesehen ist.

### Stand der Technik

Ein derartiger Injektor ist aus der DE 10 2011 090 004 A1 bekannt. Dieser Injektor weist einen Düsenkörper mit einer in einer Bohrung geführten Düsennadel auf, wobei die Düsennadel mit einer Düsenspitze in einen Düsennadelsitz eingreift und wobei die Düsennadel bei einer Öffnungsbewegung eine Düsenöffnung freigibt, durch die ein durch eine Hochdruckleitung in dem Injektor geführtes Medium gespritzt wird. In einem Injektorkörper des Injektors ist ein Aktor angeordnet, der die Düsennadel in eine Öffnungsstellung oder Schließstellung bewegen kann. Weiterhin ist in den Injektorkörper eine Ausnehmung hinein gebohrt, in die ein Sensor eingelassen ist. Der Sensor erfasst den beim Schließvorgang der Düsennadel erzeugten Körperschall, der den Sensor zum Schwingen anregt. DE102010016424 A1 und EP0304199 A2 offenbaren weitere Injektoren mit Sensoren.

Der Erfindung liegt die Aufgabe zugrunde, einen Injektor mit einem Sensor zur Bestimmung eines Druckverlaufs eines durch den Injektor geführten Mediums anzugeben, der hinsichtlich seiner Funktion verbessert ist.

### Offenbarung der Erfindung

Diese Aufgabe wird dadurch gelöst, dass der Sensor in eine taschenförmige Nut des Injektors, insbesondere des Haltekörpers und/oder des Injektorkörpers, eingesetzt ist. Zunächst einmal kann eine Nut problemlos in den Haltekörper und/oder den Injektorkörper eingelassen werden, wobei die Nut darüber hinaus den Vorteil bietet, dass der Sensor in jedem Fall vollständig in die Nut eingesetzt werden kann. Gegenüber einer Anordnung eines Sensors beispielsweise in einer Ausklinkung ist dadurch sichergestellt, dass eine Beschädigung des Sensors durch Fremdteile, die in eine Ausklinkung nahezu ungehindert eingreifen können, deutlich vermindert ist. Zudem wird die bestehende Geometrie des Haltekörpers und/oder des Injektorkörpers durch eine taschenförmige Nut nur minimal beeinträchtigt, was beispielsweise für die Haltbarkeit des Injektors von Vorteil ist. So weist die taschenförmige Nut kleinere Abmessungen als eine bekannte Ausnehmung in Form einer Bohrung auf. Dadurch ist der Haltekörper beziehungsweise der Düsenkörper deutlich weniger geschwächt.

Erfindungsgemäß ist die Nut ein Schlitz. Ein solcher Schlitz ist wiederum in weiterer Ausgestaltung gefräst und beispielsweise mittels eines Scheibenfräsers problemlos fertigbar. Dabei ist die Materialentnahme an dem Haltkörper und/oder Injektorkörper gegenüber einer herkömmlichen Ausnehmung reduziert, was sich auch für die Dauerhaltbarkeit positiv bemerkbar macht. Zudem kann der Schlitz an einer Stelle des Haltekörpers und/oder des Injektorkörpers angeordnet werden, an der eine herkömmliche Ausnehmung wegen einer zu großen Schwächung des Haltekörpers und/oder des Injektorkörpers nicht angebracht werden kann.

Eine der gegenüberliegenden Längsseiten der Nut ist dabei seitlich und parallel zu der Hochdruckleitung ausgerichtet und der Sensor mit seinem eine Verformung erfahrenden und in ein Signal umsetzenden Sensorlängsseiten zwischen zwei gegenüberliegenden Längsseiten der Nut angeordnet. Diese Ausgestaltung stellt sicher, dass beispielsweise in der Hochdruckleitung herrschende Druckpulsationen des Mediums signalstark auf den Sensor übertragen werden. Dabei kann weiterhin vorgesehen sein, die Wand zwischen der Hochdruckleitung und der benachbarten Längsseite der Nut beispielsweise durch eine entsprechend geringe Dicke der Wand als Membran in Form einer Bodenwand für den Sensor auszubilden. Diese Membran bewirkt eine signalstarke Übertragung des Druckverlaufs auf den Sensor.

In einer vorteilhaften Weiterbildung der Erfindung ist der Sensor auf Druck vorgespannt. Diese Vorspannung wird wiederum in einer weiteren Ausgestaltung der Erfindung dadurch erreicht, dass der Sensor mit seinen eine Verformung erfahrenden und in ein Signal umsetzenden Sensorlängsseiten zwischen zwei gegenüberliegenden Längsseiten der Nut angeordnet ist. Diese Ausgestaltung ist besonders vorteilhaft, weil dadurch der Sensor allein durch die Anordnung in der Nut für eine wirkungsvolle Aufnahme von Signalen ausgerichtet ist.

In Weiterbildung der Erfindung ist der Sensor ein piezokeramischer Sensor. Solche piezokeramischen Sensoren stehen in vielen Ausgestaltungen zur Verfügung. Dabei können auch mehrere piezokeramische Sensoren zu einem Sensorpaket zusammengefasst werden. Für eine Signalableitung der von dem piezokeramischen Sensor aufgenommen Signale ist zumindest an einer Sensorlängsseite eine Elektrode angeordnet, die über eine Signalleitung mit einer mit einer Auswertelektronik verbunden ist.

In weiterer Ausgestaltung der Erfindung ist der Sensor in einen Haltekäfig eingesetzt. Diese Ausgestaltung ist besonders vorteilhaft, wenn der Sensor mehrere zuvor genannte Bauelemente umfasst. Darüber hinaus bietet der Haltekäfig die Möglichkeit, unterschiedliche Sensoren in unterschiedlich breite Nuten durch entsprechend angepasste Haltekäfige einzusetzen. Darüber hinaus kann durch einen beispielsweise in einem Einführungsbereich leicht keilförmig ausgebildeten Haltekäfig der Sensor problemlos und beschädigungsfrei unter Aufbringung einer definierten Vorspannung in die Nut eingeschoben werden.

In weiterer Ausgestaltung der Erfindung ist der Sensor gegebenenfalls unter Einbezug des Haltekäfigs in die Nut eingeklebt oder wird in der Nut vergossen. Beide Ausgestaltungen stellen sicher, dass der Sensor resistent gegen äußere Einflüsse beispielsweise in Form eines aggressiven Mediums geschützt in der Nut angeordnet ist und beispielsweise elektrische Kontaktpunkte gesichert sind. Bei Verwendung von einem zähelastischen Klebstoff ist darüber hinaus der Aufbau eines hydrostatischen Drucks auf den Sensor möglich.

In weiterer Ausgestaltung der Erfindung ist der Injektor ein Kraftstoffinjektor und das Medium Kraftstoff. Wenn auch der Injektor ein beliebiger Injektor zur Einspritzung eines beliebigen Mediums sein kann, ist die bevorzugte Anwendung bei einem Kraftstoffinjektor gegeben, der an einer Brennkraftmaschine verbaut ist und wobei mit dem Kraftstoffinjektor Kraftstoff in einen zugeordneten Brennraum der Brennkraftmaschine eingespritzt wird.

Zusammenfassend ergeben sich durch die erfindungsgemäße Ausgestaltung folgende Vorteile:
- Minimale Beeinträchtigung der aktuellen Geometrie des Haltekörpers und/oder des Injektorkörpers,
- Verklebung beziehungsweise Verguss des Sensors in der Nut erfolgt in einem Schritt,
- es sind nur minimale Berührungspunkte des Sensors mit der Umgebung gegeben,
- es kann eine Nutzung von Biegemomenten und Druck zur Signalgenerierung durch den Sensor genutzt werden,
- eine Sicherung der elektrischen Kontaktpunkte des Sensors kann durch eine allseitige Umschließung mit Klebstoff erfolgen,
- bei einer Verwendung von zähelastischen Klebstoffen kann ein hydrostatischer Druck aufgebaut werden und
- es ist eine einfache Kontaktierung zu einem Steckerpin möglich, da der Sensor als Sensormodul mit Kontakten verbaut werden kann.

Weitere vorteilhafte Ausgestaltungen der Erfindung sind der Zeichnungsbeschreibung zu entnehmen, in der ein in den Figuren dargestelltes Ausführungsbeispiel näher beschrieben ist.

Es zeigen:
- Figur 1: einen Injektor mit einem teilweisen Längsschnitt durch den Injektor mit einer Darstellung einer Positionierung eines Sensors oder eines Sensorpakets in einer in einem Injektorkörper des Injektors eingelassenen Nut und
- Figur 2: einen Querschnitt durch einen Injektorkörper mit einer Darstellung eines in eine Nut in dem Injektorkörper eingesetzten Sensors oder Sensorpakets.

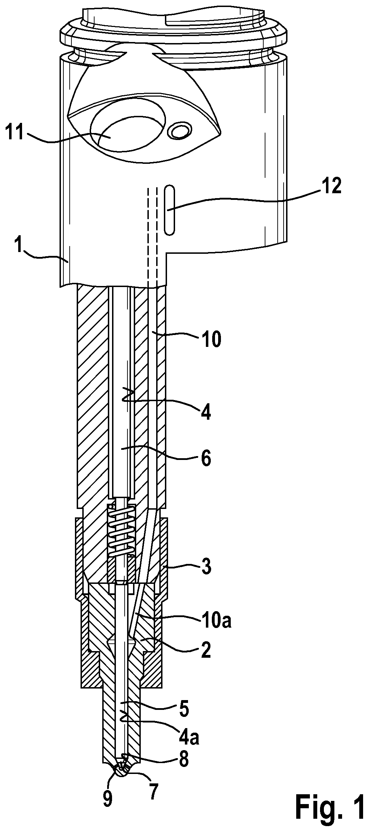

Der in Figur 1 dargestellte Injektor ist ein Kraftstoffinjektor, mit dem unter Druck stehender Kraftstoff, der beispielsweise einem Hochdruckspeicher eines Common-Rail-Einspritzsystems entnommen wird, in einen Brennraum einer Brennkraftmaschine, an der das Einspritzsystem verbaut ist, eingespritzt wird. Dabei ist der Kraftstoff insbesondere Dieselkraftstoff und die Brennkraftmaschine eine selbstzündende Brennkraftmaschine. Der Kraftstoffinjektor weist einen Injektorkörper 1 auf, der mit einem Düsenkörper 2 mittels einer Überwurfmutter 3 verschraubt ist. In dem Injektorkörper 1 und dem Düsenkörper 2 ist eine Bohrung 4, 4a eingearbeitet, in der eine Düsennadel 5 und eine mit der Düsennadel 5 zusammenwirkende Betätigungsstange 6 axial beweglich angeordnet sind. Die Düsennadel 5 kann aber auch anders betätigt werden. In einer Schließstellung der Düsennadel 5 wirkt eine Düsennadelspitze 7 der Düsennadel 5 mit einem Düsennadelsitz 8 zusammen und verschließt zumindest eine Düsenöffnung 9, die in dem Düsenkörper 2 unterhalb des Düsennadelsitzes 8 angeordnet ist.

In einer Öffnungsstellung der Düsennadel 5 befindet sich die Düsennadelspitze 7 in einer beabstandeten Stellung zu dem Düsennadelsitz 8 und gibt dann eine Strömungsverbindung durch eine in den Injektorkörper 1 und den Düsenkörper 2 eingelassene Hochdruckleitung 10, 10a zu der zumindest einen Düsenöffnung frei. In dieser Stellung wird beispielsweise aus dem Hochdruckspeicher in die Hochdruckleitung 10, 10a eingebrachter Kraftstoff durch die zumindest eine Düsenöffnung 9 in den zugeordneten Brennraum der Brennkraftmaschine eingespritzt.

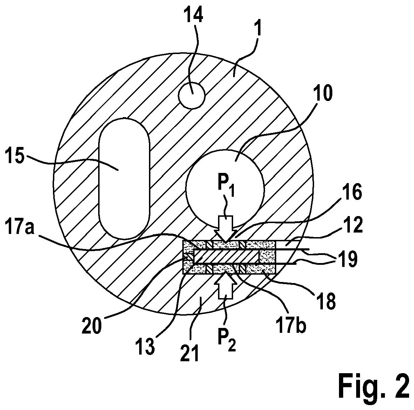

Die Düsennadel 5 wird über die Betätigungsstange 6 von einem in dem Injektorkörper 1 eingebauten Aktor direkt oder indirekt in die Öffnungsstellung und die Schließstellung verstellt, wobei zur Herstellung einer elektrischen Verbindung zwischen dem Aktor und einem Steuergerät eine Steuerleitung vorhanden ist, die durch eine Aktorkabelbohrung 11 in dem Injektorkörper 1 nach außen geführt ist. Im Bereich unterhalb der Aktorkabelbohrung 11 ist eine als Schlitz ausgebildete taschenförmige Nut 12 seitlich und parallel zu der Hochdruckleitung 10 angeordnet, wobei in die Nut 12 ein in Figur 2 dargestellter Sensor 13 oder ein Paket von Sensoren 13 eingesetzt ist.

Der in Figur 2 dargestellte Querschnitt durch den Injektorkörper 1 zeigt die Hochdruckleitung 10 und eine daneben liegende Rücklaufleitung 14. Zentral in dem Injektorkörper 1 ist eine nur schematisch dargestellte Aktorraumausnehmung 15 zur Aufnahme des Aktors zur Betätigung der Düsennadel 5 angeordnet. Die Nut 12 ist zumindest angenähert rechtwinklig zu der Hochdruckleitung 10 in den Injektorkörper 1 eingelassen und zwischen der Hochdruckleitung 10 und der Nut 12 ist eine eine Membran bildende Bodenwand 16 in dem Injektorkörper 1 gebildet.

Durch Druckpulsationen in der Hochdruckleitung 10, die in direkten Zusammenhang mit der Öffnungsbewegung und der Schließbewegung der Düsennadel 5 gegenüber dem Düsenkörpersitz 8 stehen, wird die Bodenwand 16 durch eine abgestimmte reduzierte Wandstärke reversibel verformt beziehungsweise gibt nach und beult sich in Richtung zu der Nut 12 aus. Diese Verformung beziehungsweise Ausbeulung, die mittig der Bodenwand 16 am größten ist, wird von dem in die Nut 12 eingesetzten piezokeramischen Sensor 13 aufgenommen. Dazu ist der Sensor 13 mit seinen eine Verformung erfahrenden und in ein Signal umsetzenden Sensorlängsseiten zwischen zwei gegenüberliegenden Längsseiten der Nut 12 angeordnet. Der Sensor 13 wirkt mit einer ersten Elektrode 17a und einer zweiten Elektrode 17b zusammen, die durch eine Verformung des Sensors 13 hervorgerufene Spannungssignale des piezokeramischen Sensors 13 übertragen. Die von der ersten Elektrode 17a und der zweiten Elektrode 17b aufgenommen Spannungssignale werden direkt oder über eine Kontaktierung an Signalleitungen 19 weitergegeben, die mit einer nicht dargestellten elektronischen Auswerteeinheit, die in ein Steuergerät integriert sein kann, weitergeleitet. Zwischen der ersten Elektrode 17a und der Bodenwand 16 kann zur Nutzung des größeren Stirnflächenhubs ein Druckverteiler angeordnet sein, der die auf die Bodenwand 16 ausgeübte Verformung auf den Sensor 13 überträgt. Der Druckverteiler kann eine beliebige, beispielsweise eine kegelige oder zylindrische Form aufweisen.

In dem dargestellten Ausführungsbeispiel ist der Sensor 13 mitsamt der ersten Elektrode 17a und der zweiten Elektrode 17b in einen Haltekäfig 20 eingesetzt und die so gebildete Baueinheit insgesamt so in die Nut 12 eingesetzt, dass der Sensor 13 genau quer zu der Hochdruckleitung 10 ausgerichtet ist. Eine zu der Hochdruckleitung 10 ausgerichtete Längsseite der Nut 12 begrenzt die Bodenwand 16, während die gegenüberliegende Längsseite der Nut 12 einen Gegenhalter 21 darstellt, zwischen denen der Haltekäfig 20 mit dem Sensor 13 und der ersten Elektrode 17a und der zweiten Elektrode 17b eingespannt ist. Dadurch wird bei einer Druckänderung in der Hochdruckleitung 10 ein allseitiger durch Pfeile P₁, P₂ dargestellter Druck auf letztendlich den Sensor 13 ausgeübt. Der Sensor 13 kann durch eine entsprechende Ausbildung des Haltekäfigs 20 unter Ausübung einer Vorspannung auf den Sensor 13 in die Nut eingesetzt (eingepresst) sein. Darüber hinaus kann die Nut 12 vor, während und/oder nach dem Einsetzen des Haltekäfigs 20 mit dem Sensor 13 und der ersten Elektrode 17a sowie der zweiten Elektrode 17b mit einem Kleber 18 verfüllt werden, der die Nut zumindest im Bereich der zuvor genannten Komponenten vollständig ausfüllt. Dadurch ist eine Sicherung der elektrischen Kontaktpunkte sichergestellt. Alternativ kann der Haltekäfig 20 mit den zuvor genannten Komponenten auch in der Nut vergossen sein. Insbesondere bei Verwendung von zähelastischen Klebstoffen oder Vergußmasse ist der Aufbau eines hydrostatischen Drucks möglich, der ergänzend oder alternativ zu der zuvor beschriebenen mechanischen Vorspannung eine Vorspannung auf den Sensor 13 ausübt.

## Patentansprüche

1. Injektor aufweisend einen Injektorkörper (1) sowie einen Düsenkörper (2) mit einer eine Düsennadel (5) aufnehmenden Bohrung (4, 4a), wobei die Düsennadel (5) in der Bohrung (4, 4a) translatorisch bewegbar ist, und eine mit einem Düsennadelsitz (8) zusammenwirkende Düsennadelspitze (7) aufweist, wobei dem Düsennadelsitz (8) zumindest eine Düsenöffnung (9) zugeordnet ist, die gesteuert von der Düsennadel (5) mit einer Hochdruckleitung (10, 10a) für ein Medium in dem Injektorkörper (1) und dem Düsenkörper (2) verbunden ist, und wobei ein Sensor (13) zur Aufnahme eines Druckverlaufs des Mediums vorgesehen ist,
**dadurch gekennzeichnet,**
**dass** der Sensor (13) in eine als Schlitz ausgebildete, taschenförmige Nut (12) des Injektors eingesetzt ist, wobei eine der gegenüberliegenden Längsseiten der Nut (12) seitlich und parallel zu der Hochdruckleitung (10, 10a) ausgerichtet ist, und der Sensor (13) mit seinem eine Verformung erfahrenden und in ein Signal umsetzenden Sensorlängsseiten zwischen den zwei gegenüberliegenden Längsseiten der Nut (12) angeordnet ist.

2. Injektor nach Anspruch 1,
**dadurch gekennzeichnet, dass** der Schlitz ein gefräster Schlitz ist.

3. Injektor nach einem der vorherigen Ansprüche,
**dadurch gekennzeichnet, dass** der Sensor (13) auf Druck vorgespannt ist.

4. Injektor nach einem der vorherigen Ansprüche,
**dadurch gekennzeichnet, dass** der Sensor (13) ein piezokeramischer Sensor (13) ist.

5. Injektor nach einem der vorherigen Ansprüche,
**dadurch gekennzeichnet, dass** der Sensor (13) in einen Haltekäfig (20) eingesetzt ist.

6. Injektor nach einem der vorherigen Ansprüche,
**dadurch gekennzeichnet, dass** der Sensor (13) in die Nut (12) eingeklebt ist.

7. Injektor nach einem der vorherigen Ansprüche,
**dadurch gekennzeichnet, dass** der Sensor (13) in der Nut (12) vergossen ist.

8. Injektor nach einem der vorherigen Ansprüche,
**dadurch gekennzeichnet, dass** der Injektor ein Kraftstoffinjektor ist und dass das Medium Kraftstoff ist.

## Claims

1. Injector having an injector body (1) and a nozzle body (2) with a borehole (4, 4a) which accommodates a nozzle needle (5), wherein the nozzle needle (5) can be moved in a translatory fashion in the borehole (4, 4a) and has a nozzle needle tip (7) which interacts with a nozzle needle seat (8), wherein at least one nozzle opening (9) is assigned to the nozzle needle seat (8) and is connected, under control by the nozzle needle (5), to a high-pressure line (10, 10a) for a medium in the injector body (1) and the nozzle body (2), and wherein a sensor (13) is provided for recording a pressure profile of the medium,
**characterized**
**in that** the sensor (13) is inserted into a pocket-shaped groove (12), embodied as a slot, of the injector, wherein one of the longitudinal sides of the groove (12) which lie opposite one another is oriented laterally and in parallel with the high-pressure line (10, 10a), and the sensor (13) is arranged with its sensor longitudinal sides which experience deformation and convert it into a signal, between the two opposite longitudinal sides of the groove (12).

2. Injector according to Claim 1,
**characterized in that** the slot is a milled slot.

3. Injector according to one of the preceding claims, **characterized in that** the sensor (13) is prestressed under pressure.

4. Injector according to one of the preceding claims, **characterized in that** the sensor (13) is a piezo-ceramic sensor (13).

5. Injector according to one of the preceding claims, **characterized in that** the sensor (13) is inserted into a holding cage (20).

6. Injector according to one of the preceding claims, **characterized in that** the sensor (13) is bonded into the groove (12).

7. Injector according to one of the preceding claims, **characterized in that** the sensor (13) is cast in the groove (12).

8. Injector according to one of the preceding claims, **characterized in that** the injector is a fuel injector, and **in that** the medium is fuel.

## Revendications

1. Injecteur présentant un corps d'injecteur (1) ainsi qu'un corps d'ajutage (2) présentant un alésage (4, 4a) reprenant un pointeau d'ajutage (5), le pointeau d'ajutage (5) pouvant se déplacer en translation dans l'alésage (4, 4a), et une pointe (7) d'aiguille d'ajutage qui coopère avec un siège (8) d'aiguille d'ajutage, une ou plusieurs ouvertures d'ajutage (9) étant associées au siège (8) d'aiguille d'ajutage et étant reliées de manière contrôlée par le pointeau d'ajutage (5) à un conduit (10, 10a) prévu pour un fluide dans le corps d'injecteur (1) et le corps d'ajutage (2), un capteur (13) recevant l'évolution de la pression du fluide,
**caractérisé en ce que**
le capteur (13) est inséré dans une rainure (12), en forme de poche, configurée comme fente ménagée dans l'injecteur, un des côtés longitudinaux opposés de la rainure (12) étant aligné latéralement et parallèlement au conduit (10, 10a), le capteur (13) étant disposé avec son côté longitudinal subissant une déformation et la convertissant en un signal entre les deux côtés longitudinaux opposés de la rainure (12).

2. Injecteur selon la revendication 1, **caractérisé en ce que** la fente est une fente fraisée.

3. Injecteur selon l'une des revendications précédentes, **caractérisé en ce que** le capteur (13) est précontraint sous pression.

4. Injecteur selon l'une des revendications précédentes, **caractérisé en ce que** le capteur (13) est un capteur (13) piézo-céramique.

5. Injecteur selon l'une des revendications précédentes, **caractérisé en ce que** le capteur (13) est inséré dans une cage de maintien (20).

6. Injecteur selon l'une des revendications précédentes, **caractérisé en ce que** le capteur (13) est collé dans la rainure (12).

7. Injecteur selon l'une des revendications précédentes, **caractérisé en ce que** le capteur (13) est encapsulé dans la rainure (12).

8. Injecteur selon l'une des revendications précédentes, **caractérisé en ce que** l'injecteur est un injecteur de carburant et **en ce que** le fluide est un carburant.
